# EUROPEAN PATENT APPLICATION

(11) **EP 3 184 466 A1**
(43) Date of publication of application: **28.06.2017**
(21) Application number: 15784919.1
(22) Date of filing: 07.08.2015
(51) Int. Cl.: B65D 88/74, B65D 90/04, B65D 90/02

(54) **CONTAINER WITH BUILT-IN OIL TANK**

(30) Priority: 03.03.2015 CN 201510094849
(71) Applicant: Qingdao CIMC Special Reefer Co., Ltd., Qingdao, Shandong 266300 (CN); CIMC Containers Holding Company Ltd., Dongguan, Guangdong 523000 (CN); China International Marine Containers (Group) Ltd., Shekou Industrial Zone Shenzhen, Guangdong, 518067 (CN)
(72) Inventor: FAN, Pingyan, Qingdao Shandong (CN); SUN, Jidong, Qingdao Shandong (CN); MA, Zhaoyun, Qingdao Shandong (CN); ZHANG, Hongchun, Qingdao Shandong (CN); LIU, Wei, Qingdao Shandong (CN); SUN, Liying, Qingdao Shandong (CN); WANG, Hongxin, Qingdao Shandong (CN); SHEN, Xingpei, Qingdao Shandong (CN)
(74) Representative: Wohlfahrt, Jan Günther
(86) International application number: PCT/CN2015/086359
(87) International publication number: WO 2016/138739

(57) **Abstract**

The present invention discloses a container with a built-in oil tank, comprising a refrigerator and an oil tank connected with the refrigerator, characterized in that a thermal insulation isolation cavity is arranged in the container with the built-in oil tank, the oil tank is arranged in the thermal insulation isolation cavity, the thermal insulation isolation cavity is enclosed by a plurality of thermal insulation walls, a thermal insulation device is arranged on the thermal insulation isolation cavity, and the thermal insulation device includes an internal thermal insulation wall and an external thermal insulation wall which is arranged to be opposite to the internal thermal insulation wall. In the container with the built-in oil tank according to the present invention, the oil tank is arranged in the thermal insulation isolation cavity to prevent fuel in the oil tank from solidifying, so as to guarantee the normal work of the refrigerator under extreme conditions, and thus more economical diesel oil can be used to effectively reduce the operation cost and effectively prevent collision damage of the oil tank.

## Description

### Field of the Invention

The present invention relates to the field of containers, and particularly relates to a container with a built-in oil tank.

### Background of the Invention

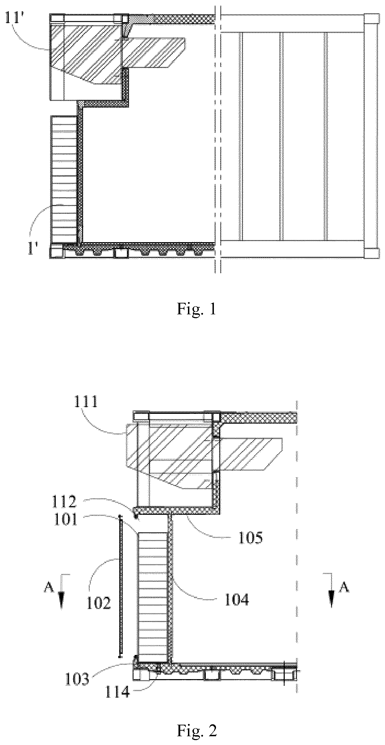

Due to the relatively wide use application range (working in a power mode in coastal or marine transportation and working in a fuel mode in highway or railway transportation), diesel-electric hybrid refrigerators are promoted and used more and more widely. In this transportation mode, an oil tank generally needs to be arranged, as shown in Fig. 1, in the current common design, an oil tank 1' is placed below or on one side of a refrigerator 11', and the design has the advantages of simple structure and convenient maintenance.

However, this design also has drawbacks which are difficult to solve: because of the wide application range of the product, when passing by cold areas (in some cold areas or high altitude areas, the temperature can reach minus 50 degrees or lower) in a transportation process, a fuel solidification risk is induced easily, resulting in that the refrigerator cannot work to cause cargo damage, and this reduces the competitiveness of the product to a certain extent. The above-mentioned risk cannot be completely avoided even if the lowest grade of diesel oil (-35#light diesel oil is suitable for use in areas with the lowest temperature higher than -29 °C and a risk ratio of 10%; the -50# light diesel oil is suitable for use in areas with the lowest temperature higher than -44°C and a risk ratio of 10%) is used, and meanwhile, the operation cost is increased. In addition, the external oil tank 1' has potential safety hazards.

### Summary of the Invention

A series of simplified forms of concepts are introduced into the part of the summary of the invention, which will be further illustrated in detail in the part of the detailed description of the embodiments. The part of the summary of the invention does not mean attempting to define the key features and the necessary technical features of the technical solutions which are required to be protected, and does not mean attempting to determine the protection scope of the technical solutions which are required to be protected.

To solve the above-mentioned problems, the present invention discloses a container with a built-in oil tank, including a refrigerator and an oil tank connected with the refrigerator, characterized in that a thermal insulation isolation cavity is arranged in the container with the built-in oil tank, the oil tank is arranged in the thermal insulation isolation cavity, the thermal insulation isolation cavity is enclosed by a plurality of thermal insulation walls, a thermal insulation device is arranged on the thermal insulation isolation cavity, and the thermal insulation wall includes an internal thermal insulation wall and an external thermal insulation wall which is arranged to be opposite to the internal thermal insulation wall.

Optionally, the thermal insulation device includes air windows which are respectively arranged on the internal thermal insulation wall and the external thermal insulation wall.

Optionally, the thermal insulation wall further includes a bottom thermal insulation wall, a top thermal insulation wall and two lateral thermal insulation walls, characterized in that the bottom thermal insulation wall, the internal thermal insulation wall, the top thermal insulation wall and the two lateral thermal insulation walls enclose the cavity of the thermal insulation isolation cavity.

Optionally, the thermal insulation device includes a first air window and a second air window which are arranged on the internal thermal insulation wall and a third air window which is arranged on the external thermal insulation wall, the thermal insulation isolation cavity is connected with the interior of the container with the built-in oil tank through the first air window and the second air window, and the thermal insulation isolation cavity is connected with the exterior of the container with the built-in oil tank through the third air window.

Optionally, a fan is arranged on at least one of the first air window, the second air window and the third air window.

Optionally, the fan is used for wind power generation, the fan is electrically connected to a storage battery, and the storage battery is arranged in the thermal insulation isolation cavity.

Optionally, an oil filler and a fuel gauge connected with the oil tank are arranged on the container with the built-in oil tank.

Optionally, the external thermal insulation wall is openably connected with the cavity.

Optionally, the openable connection is bolt connection or clamping.

Optionally, the external thermal insulation wall is configured as a hinged door, a sliding door, a folding door or a rolling door.

Optionally, at least a part of the external thermal insulation wall is thickened to improve the thermal insulation property.

Optionally, the thermal insulation isolation cavity is arranged at the front end of the container with the built-in oil tank and is arranged below the refrigerator.

Optionally, a handle and/or an access hole are/is arranged on the external thermal insulation wall.

Optionally, the thermal insulation device includes at least one of a heat tracing band, a pipeline circulation heating system and a phase change thermal insulation material.

In the container with the built-in oil tank according to the present invention, the oil tank is arranged in the thermal insulation isolation cavity to prevent fuel in the oil tank from solidifying, so as to guarantee the normal work of the refrigerator under extreme conditions, and thus more economical diesel oil can be used to effectively reduce the operation cost and effectively prevent collision damage of the oil tank.

A series of simplified forms of concepts are introduced into the part of the summary of the invention, which will be further illustrated in detail in the part of the detailed description of the embodiments. The part of the summary of the invention does not mean attempting to define the key features and the necessary technical features of the technical solutions which are required to be protected, and does not mean attempting to determine the protection scope of the technical solutions which are required to be protected.

### Brief Description of the Drawings

The advantages and features of the present invention will be illustrated below in detail in combination with accompanying drawings. The following accompanying drawings of the present invention are used as a part of the present invention herein for understanding the present invention. The accompanying drawings show the embodiments of the present invention and the descriptions thereof for explaining the principle of the present invention. In the accompanying drawings,
Fig. 1 is a schematic diagram of a container with an oil tank in the prior art;
Fig.2 is a schematic diagram of a container with a built-in oil tank according to the first embodiment of the present invention;
Fig.3 is an A-A section view in Fig.2;
Fig.4 is a schematic diagram of ventilation circulation of a container with a built-in oil tank according to the second embodiment of the present invention at a heating working condition;
Fig.5 is a schematic diagram of ventilation circulation of a container with a built-in oil tank according to the third embodiment of the present invention at a refrigeration working condition;
Fig.6 is a schematic diagram of a container with a built-in oil tank according to the fourth embodiment of the present invention;
Fig.7 is a B-B section view in Fig.6;
Fig.8 is a schematic diagram of a container with a built-in oil tank according to the fifth embodiment of the present invention;
Fig.9 is a C-C section view in Fig.8; and
Fig. 10 is a front view of an external thermal insulation wall of a container with a built-in oil tank according to the present invention.

### Detailed Description of the Embodiments

In the following descriptions, numerous specific details are given to provide a more thorough understanding of the present invention. However, it is obvious to those skilled in the art that the embodiments of the present invention can be implemented without needing one or more of these details. In other examples, in order to avoid confusion with the embodiments of the present invention, some technical features known in the art are not described.

In order to thoroughly understand the embodiments of the present invention, detailed structures are proposed in the following descriptions. Obviously, the implementation of the embodiments of the present invention is not limited to particular details to which those skilled in the art is familiar. Preferred embodiments of the present invention will be described below in detail, but in addition to these detailed descriptions, the present invention can also have other embodiments.

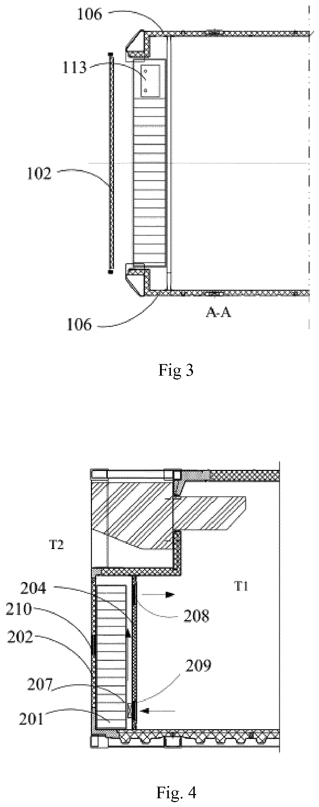

Referring to Fig.2 and Fig.3 at first, the figures show the first embodiment of a container with a built-in oil tank of the present invention. The container includes a refrigerator 111 and an oil tank 101 connected with the refrigerator 111, characterized in that a thermal insulation isolation cavity 112 is arranged in the container, the oil tank 101 is arranged in the thermal insulation isolation cavity 112, and the thermal insulation isolation cavity 112 is enclosed by a plurality of thermal insulation walls.

In the embodiment, specifically, the thermal insulation wall includes an external thermal insulation wall 102, a bottom thermal insulation wall 103, an internal thermal insulation wall 104, a top thermal insulation wall 105 and two lateral thermal insulation walls 106. The thermal insulation isolation cavity 112 enclosed by the external thermal insulation wall 102, the bottom thermal insulation wall 103, the internal thermal insulation wall 104, the top thermal insulation wall 105 and the two lateral thermal insulation walls 106 is configured as a hexahedron. Characterized in that, the bottom thermal insulation wall 103, the internal thermal insulation wall 104, the top thermal insulation wall 105 and the two lateral thermal insulation walls 106 are configured as a cavity with an opening, the external thermal insulation wall 102 is openably connected with the cavity, so as to seal the opening when requiring thermal insulation and open the opening when requiring such works as maintenance or the like. The thermal insulation isolation cavity 112 is arranged at the front end of the container. It should be noted that, the "openably connected with the cavity" means that can be at least partially deviated from the cavity, which contains a detachable connection with the cavity.

In order to reduce collision between the oil tank 101 and the thermal insulation isolation cavity 112 in the transportation process, the oil tank 101 and the thermal insulation isolation cavity 112 can be fixedly connected or configured asas an integral member. Of course, a buffering material can be filled in or a buffering structure can be arranged in a gap between the oil tank 101 and the thermal insulation isolation cavity 112.

In addition, the openable connection for openably connecting the external thermal insulation wall 102 with the cavity can be bolt connection or clamping. In some embodiments, the external thermal insulation wall 102 can be configured as a hinged door, a sliding door, a folding door or a rolling door or the like.

Although the oil tank 101 in the present invention and the oil tank 1' in the prior art as shown in Fig. 1 are arranged below the refrigerator, the oil tank 101 in the present invention is arranged in the thermal insulation isolation cavity 112, while the thermal insulation isolation cavity 112 is enclosed by the thermal insulation walls, so that the oil tank 101 is protected by the thermal insulation walls on the surrounding to greatly reduce the damage caused by collision. Moreover, since the oil tank 101 is arranged in the thermal insulation isolation cavity 112, the thermal insulation effect thereof is much better than that of the structure in which the oil tank 1' is arranged at the outside of the container.

The oil tank 101 of the container in the present invention is arranged in the thermal insulation isolation cavity 112, to prevent the fuel in the oil tank 101 from solidifying, so as to guarantee the normal work of the refrigerator under extreme conditions, and thus more economical diesel oil can be used to effectively reduce the operation cost and effectively prevent collision damage to the oil tank 101. In addition, the thermal insulation isolation cavity 112 includes the external thermal insulation wall 102 which is provided with the open cavity and the sealed opening, and the external thermal insulation wall 102 is openably connected with the cavity, so that the oil tank 101 and other devices (for example, a storage battery 113, a refrigerator fuel assembly and an intelligent electronic assembly and the like) in the thermal insulation isolation cavity 112 can be repaired and maintained conveniently.

In addition, in order to reduce the collision between the oil tank 101 and the thermal insulation isolation cavity 112 in the transportation process, the oil tank 101 and the thermal insulation isolation cavity 112 can be fixedly connected or configured as an integral member. Of course, the buffering material can be filled in or the buffering structure can be arranged in the gap between the oil tank 101 and the thermal insulation isolation cavity 112.

Referring to Fig.3, the bottom of the thermal insulation isolation cavity 112 is provided with a water leaker 114, therefore the thermal insulation isolation cavity 112 can be sealed and isolated from a cargo area through the internal thermal insulation wall 104, so as to avoid cargo pollution due to fuel leakage.

Please refer to Fig.4 now, in the second embodiment of the present invention, a thermal insulation device can be further arranged on the thermal insulation isolation cavity 102, in the embodiment shown in the figure, the thermal insulation device can include a plurality of air windows. Those skilled in the art should be aware that the air windows can be controlled by a temperature sensor, and air circulation can be carried out between the thermal insulation isolation cavity 102 and a freight house in the container or the external air to keep the fuel temperature within an applicable range.

Specifically, as shown in Fig.4, the air windows can include a third air window 210 which is arranged on the external thermal insulation wall 202, and a first air window 208 and a second air window 209 which are arranged on the internal thermal insulation wall 204. The thermal insulation isolation cavity is connected with the exterior of the container through the third air window 210, and the thermal insulation isolation cavity is connected with the interior of the container through the first air window 208 and the second air window 209. A fan 207 can be arranged at the second air window 209 to reinforce the ventilation effect. Further, the fan 207 can also be electrically connected with a storage battery to serve as a wind power generation device. Those skilled in the art should be aware that the wind power at the fan 207 can be converted into electric power via a corresponding device to charge the storage battery, and the storage battery can be arranged in the thermal insulation isolation cavity. Of course, the fan 207 can also be arranged at the first air window 208 and the third air window 210, namely, the fan 207 can be arranged on at least one of the first air window 208, the second air window 209 and the third air window 210.

Please refer to Fig.4, in the second embodiment, the mark numbers of members corresponding to the first embodiment are consistent, and only the first number is changed from '1' into '2'. In the case that the temperature T1 in the container is -18°C (a general cold chain temperature) and the ambient temperature T2 at the outside of the container is -40°C, since the ambient temperature T2 at the outside of the container is lower, the working mode of the refrigerator is heating. At this time, the fan 207 on the internal thermal insulation wall 204 is opened to drive the first air window 208 and the second air window 209 on the internal thermal insulation wall 204 to open, circulating air enters the thermal insulation isolation cavity from the interior of the container via the second air window 209, and then the circulating air goes out from the thermal insulation isolation cavity from the first air window 208 after heat exchange, so that the temperature of the thermal insulation isolation cavity at the oil tank 201 can be guaranteed at about -18°C, and at this time, the -35# diesel oil can be used safely and reliably.

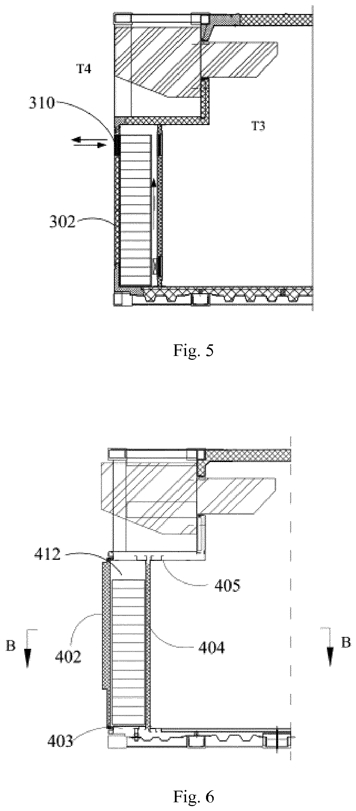

Referring to Fig. 5, it shows the working condition of the container at a refrigeration working condition, in the third embodiment, the mark numbers of members corresponding to the first embodiment are consistent, and only the first number is changed from '1' into '3'. In the case that the temperature T3 in the container is -18°C (the general cold chain temperature) and the ambient temperature T4 at the outside of the container is 30°C, since the ambient temperature T4 at the outside of the container is higher, the working mode of the refrigerator is refrigeration, at this time, the fan on the internal thermal insulation wall can be opened, and the third air window 310 on the external thermal insulation wall 302 is opened at this time, the operation has two basic functions, one is that the first air window and the second air window on the internal thermal insulation wall can be guaranteed to be in a closed state; the other is that air flow in the external environment enters the thermal insulation isolation cavity, to maintain the ambient temperature at the oil tank 1 at about 30°C, and an ordinary grade of diesel oil can be used at this time.

In the above-mentioned embodiment, the temperature is adjusted by ventilation. Of course, the thermal insulation device can also be a heat tracing band, a pipeline circulation heating system, a phase change thermal insulation material and the like, and the positions of the oil tank and the thermal insulation isolation cavity are other positions beyond those in the embodiment.

Optionally, an oil filler and a fuel gauge (not shown) connected with the oil tank are arranged on the container. The oil filler and the fuel gauge can be determined according to the arrangement position and size of the oil tank 1, and will not be described herein in detail.

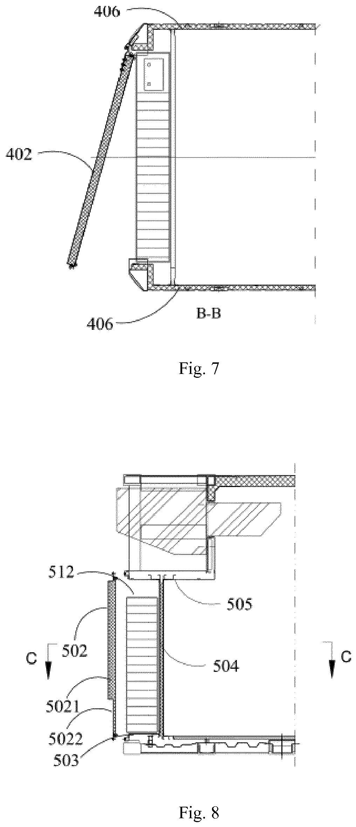

Referring to Fig.6 and Fig.7 now, they show the fourth embodiment of the present invention, in the fourth embodiment, the mark numbers of members corresponding to the first embodiment are consistent, and only the first number is changed from '1' into '4'.

In the embodiment, the thermal insulation isolation cavity 412 enclosed by the external thermal insulation wall 402, the bottom thermal insulation wall 403, the internal thermal insulation wall 404, the top thermal insulation wall 405 and the two lateral thermal insulation walls 406 is configured as a hexahedron. The external thermal insulation wall 402 is connected with the thermal insulation isolation cavity 412 through a hinge, namely, the upper end of the external thermal insulation wall 402 is hinged with the cavity 412. This structure is both simple and is convenient to operate.

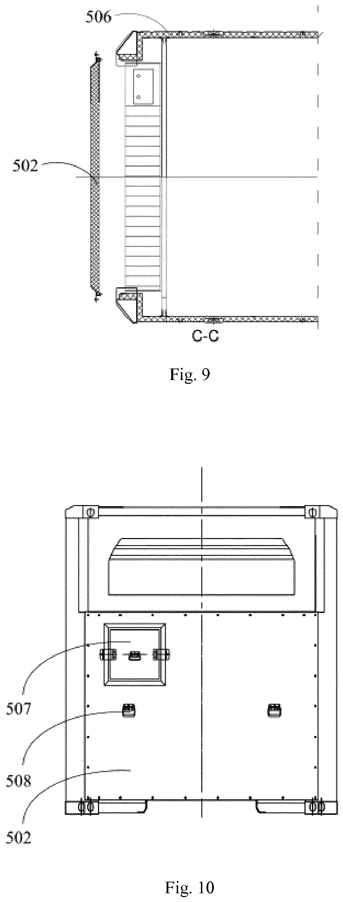

Referring to Fig.8 and Fig.9 now, they show the fifth embodiment of the present invention, in the fifth embodiment, the mark numbers of members corresponding to the first embodiment are consistent, and only the first number is changed from '1' into '5'.

In the embodiment, the thermal insulation isolation cavity 512 enclosed by the external thermal insulation wall 502, the bottom thermal insulation wall 503, the internal thermal insulation wall 504, the top thermal insulation wall 505 and the two lateral thermal insulation walls 506 is configured as a hexahedron. The external thermal insulation wall 502 is openably connected with the thermal insulation isolation cavity 512.

To achieve a better thermal insulation effect, the external thermal insulation wall 502 can be configured as a step shape, namely, at least a part of the external thermal insulation wall 502 is thickened, referring to Fig.8, the external thermal insulation wall 502 can be divided into a first part 5021 and a second part 5022, and the first part 5021 is thicker than the second part 5022, so that the first part 5021 can obtain a better thermal insulation effect.

In addition, as shown in Fig.10, a handle 508 and/or an access hole 507 can be further arranged in the external thermal insulation wall 502. The handle 508 can be used for conveniently opening or closing the external thermal insulation wall 502. The access hole 507 can be used for checking and maintaining equipment in the thermal insulation isolation cavity 512 without opening the external thermal insulation wall 502. Those skilled in the art should be aware that, the access hole 507 can include an opening formed in the external thermal insulation wall 502 and a cover covering the opening, the cover is made from a thermal insulation material, or a thermal insulation material is arranged in the cover to guarantee the thermal insulation effect at the opening.

The present invention has been illustrated by the above-mentioned embodiments, but it should be understood that, the above-mentioned embodiments are merely used for citing and illustrating, rather than limiting the present invention within the scope of the described embodiments. In addition, those skilled in the art can understand that, the present invention is not limited to the above-mentioned embodiments, more variations and modifications can also be made according to the instruction of the present invention, and these variations and modifications shall fall within the required protection scope of the present invention.

## Claims

1. A container with a built-in oil tank, comprising a refrigerator and an oil tank connected with the refrigerator, **characterized in that** a thermal insulation isolation cavity is arranged in the container with the built-in oil tank, the oil tank is arranged in the thermal insulation isolation cavity, the thermal insulation isolation cavity is enclosed by a plurality of thermal insulation walls, a thermal insulation device is arranged on the thermal insulation isolation cavity, and the thermal insulation wall comprises an internal thermal insulation wall and an external thermal insulation wall which is arranged to be opposite to the internal thermal insulation wall.

2. The container with the built-in oil tank of claim 1, **characterized in that** the thermal insulation device comprises air windows which are respectively arranged on the internal thermal insulation wall and the external thermal insulation wall.

3. The container with the built-in oil tank of claim 1, **characterized in that** the thermal insulation wall further comprises a bottom thermal insulation wall, a top thermal insulation wall and two lateral thermal insulation walls, **characterized in that** the bottom thermal insulation wall, the internal thermal insulation wall, the top thermal insulation wall and the two lateral thermal insulation walls enclose the cavity of the thermal insulation isolation cavity.

4. The container with the built-in oil tank of claim 3, **characterized in that** the thermal insulation device comprises a first air window and a second air window which are arranged on the internal thermal insulation wall and a third air window which is arranged on the external thermal insulation wall, the thermal insulation isolation cavity is connected with the interior of the container with the built-in oil tank through the first air window and the second air window, and the thermal insulation isolation cavity is connected with the exterior of the container with the built-in oil tank through the third air window.

5. The container with the built-in oil tank of claim 4, **characterized in that** a fan is arranged on at least one of the first air window, the second air window and the third air window.

6. The container with the built-in oil tank of claim 5, **characterized in that** the fan is used for wind power generation, the fan is electrically connected to a storage battery, and the storage battery is arranged in the thermal insulation isolation cavity.

7. The container with the built-in oil tank of claim 1, **characterized in that** an oil filler and a fuel gauge connected with the oil tank are arranged on the container with the built-in oil tank.

8. The container with the built-in oil tank of claim 3, **characterized in that** the external thermal insulation wall is openably connected with the cavity.

9. The container with the built-in oil tank of claim 8, **characterized in that** the openable connection is bolt connection or clamping.

10. The container with the built-in oil tank of claim 3, **characterized in that** the external thermal insulation wall is configured as a hinged door, a sliding door, a folding door or a rolling door.

11. The container with the built-in oil tank of claim 1, **characterized in that** at least a part of the external thermal insulation wall is thickened to improve the thermal insulation property.

12. The container with the built-in oil tank of claim 1, **characterized in that** the thermal insulation isolation cavity is arranged at the front end of the container with the built-in oil tank and is arranged below the refrigerator.

13. The container with the built-in oil tank of claim 1, **characterized in that** a handle and/or an access hole is arranged in the external thermal insulation wall.

14. The container with the built-in oil tank of any of claims 1-13, **characterized in that** the thermal insulation device comprises at least one of a heat tracing band, a pipeline circulation heating system and a phase change thermal insulation material.
